# EUROPÄISCHE PATENTSCHRIFT

(11) **EP 0 836 672 B1**
(45) Veröffentlichungstag und Bekanntmachung des Hinweises auf die Patenterteilung: **07.04.1999**
(21) Anmeldenummer: 96922836.0
(22) Anmeldetag: 19.06.1996
(51) Int. Cl.: F01N 3/02, B01D 46/24, B01D 39/20

(54) **Filterkerze**
Filter element
Elément filtrant

(30) Priorität: 04.07.1995 DE 19524399
(43) Veröffentlichungstag der Anmeldung: 22.04.1998
(73) Patentinhaber: Forschungszentrum Karlsruhe GmbH, 76133 Karlsruhe (DE)
(72) Erfinder: DILLMANN, Hans-Georg, D-76344 Eggenstein-Leopoldshafen (DE); FURRER, Jürgen, D-76344 Eggenstein-Leopoldshafen (DE)
(74) Vertreter: Rückert, Friedrich, Dr.
(86) Internationale Anmeldenummer: EP9602641
(87) Internationale Veröffentlichungsnummer: WO9702411

(56) Entgegenhaltungen:
- EP-A- 0 244 061
- EP-A- 0 454 346
- EP-A- 0 599 323
- WO-A-93/00503
- US-A- 5 165 899

## Beschreibung

Die vorliegende Erfindung betrifft eine Filterkerze zum Einsetzen in ein Gehäuse zur Abscheidung von brennbaren Substanzen aus Abgasen mit Regenerierung des beladenen Filtermateriales durch Verbrennung mit elektrischer Zündung, z.B. von mit Ruß beladenen Filtern im Abgasstrang von Dieselmotoren, wobei das Filtermaterial selbst elektrisch leitfähig ist und durch ohmsche Erwärmung über die Verbrennungstemperatur der abzuscheidenden Substanzen gebracht wird, mit einem hohlzylindrisch ausgebildeten Filterkörper aus dem Fasermaterial, der an seiner einen Seite mittels einer Endplatte als Kerzenkopf verschlossen ist und an seiner anderen Seite auf einer ringförmigen Platte mit einer Öffnung für den Gasdurchtritt sitzt, wobei die Stromzuführung bzw. - ableitung über die beiden, elektrisch leitfähigen Platten erfolgt und an der, dem Filterkörper abgewendeten Seite des Kerzenkopfes die Stromzuführung zu diesem im Bereich der Reingasseite angebracht ist, wobei sie gegenüber dem Gehäuse elektrisch und thermisch isoliert ist

Die Erfindung befaßt sich mit der Selbstregenerierung von Rußfiltern im Abgasstrang von Dieselmotoren. Aus der EP-A-0 244 061 ist dazu ein Verfahren zur Abreinigung bzw. zum Regenerieren von mit brennbaren Substanzen beladenen, elektrisch leitfähigen Filterkerzen durch Verbrennung mit elektrischer Zündung bekannt, wobei das elektrisch leitfähige Filtermaterial selbst durch direkte ohmsche Erwärmung über die Verbrennungstemperatur der abzuscheidenden Substanzen gebracht wird. Bei diesem Verfahren werden die Filterkerzen jedoch von außen beaufschlagt, was bei der Verbrennung zu Wärmeverlusten durch radiale Abstrahlung und damit zu einem ungünstigen Verbrennungsablauf führt. Die Zuführung des elektrischen Stromes bzw. seine Kontaktierung zur Zündung der Verbrennung liegt dabei auf der Außenseite der Filterkerze im Bereich des ungereinigten Abgases. Dies führt zu einer starken Korrosion derselben und damit zu einer sehr begrenzten Lebensdauer der Kerze.

Eine weitere Filterkerze ist aus der EP-A-0 454 346 bekannt, bei welcher ein keramisches, in gewissem Umfang elektrisch leitfähiges Filterelement von innen beaufschlagt und direkt elektrisch beheizt wird. Durch die geringe elektrische und thermische Leitfähigkeit der verwendeten Materialien ist die Regenerierfähigkeit jedoch eingeschränkt, es lassen sich daher nur geringe Mengen abgeschiedener Stoffe verbrennen.

Ausgehend von diesem Stand der Technik hat nun die vorliegende Erfindung zur Aufgabe, eine neue Filterkerze zur Abscheidung von brennbaren Substanzen aus Abgasen mit Regenerierung des beladenen Filtermateriales durch Verbrennung mit elektrischer Zündung anzugeben, die vor allem zur Regenerierung von Rußfiltern im Abgasstrang von Dieselmotoren mit optimalem Verbrennungsablauf arbeitet. Sie soll die angegebenen Nachteile vermeiden, d. h. genügend standfähig sein und eine geringere Energiemenge für die elektrische Zündung benötigen.

Zur Lösung dieser Aufgabe werden gemäß der vorliegenden Erfindung die Merkmale vorgeschlagen, die im kennzeichnenden Teil des Patentanspruches 1 angegeben sind. Weitere vorteilhafte Merkmale der Erfindung sind in den kennzeichnenden Merkmalen der Unteransprüche angegeben. Bei der neuen Filterkerze wird nun der Strom dem Filtermedium aufgrund des metallischen Aufbaues direkt und unmittelbar zugeführt. Durch die direkte Beheizung des Filtermateriales und die besondere Gestaltung der Schweißnähte ist eine sehr schnelle und verlustarme Aufheizung des Filtermediums möglich. Die konstruktive Anbringung der Elektrokontakte ist dabei so ausgeführt, daß die Kontakte nicht mit dem zu reinigenden Gas als korrosivem Medium in Berührung kommen. Ein Abreinigen ist ohne Störung während des Fahrbetriebes möglich, wobei durch modularen Aufbau ein Anpassen der Gasreinigungsanlage an verschiedene Motorgrößen möglich ist. Das keramische Hüllrohr kann dabei die Wärmeverluste verringern und gleichzeitig als Katalysator für weitere Gasreinigungsprozesse eingesetzt werden.

Weitere Einzelheiten der Filterkerze sowie des zugehörigen Verfahrens werden im folgenden und anhand der Figuren 1 bis 4 näher erläutert. Es zeigen:
die Fig. 1 die Filterkerze in Seitenansicht,
die Fig. 2 einen Teillängsschnitt der Einzelheiten A und B der Fig. 1 in vergrößerter Darstellung
die Fig. 3 einen Querschnitt der in einem Gehäuse eingebauten Kerze
die Fig. 4 eine andere Ausführung der Kerze gemäß der Fig. 3.

Bei dem in der Filterkerze ausgeübten Verfahren werden Rußpartikel auf einem Vlies aus Metallfasern abgeschieden und durch direkte elektrische Erhitzung des Metallfaservlieses auf der Faser zur restlichen Verbrennung aufgeheizt. Das Verfahren dient dabei zum Regenerieren der mit brennbaren Substanzen beladenen, elektrisch leitfähigen Filtermaterialien durch Verbrennung bzw. Oxidation unter Sauerstoffüberschuß mit elektrischer Zündung. Solche Filtermaterialien sind vor allem mit Ruß beladene Filter im Abgasstrang von Dieselmotoren, wobei das elektrisch leitfähige Filtermaterial selbst durch direkte ohmsche Erwärmung über die Oxidations- bzw. Verbrennungstemperatur der abzuscheidenden Substanzen gebracht und damit der Regenerationsvorgang durch Oxidation z. B. des Rußes gezündet wird.

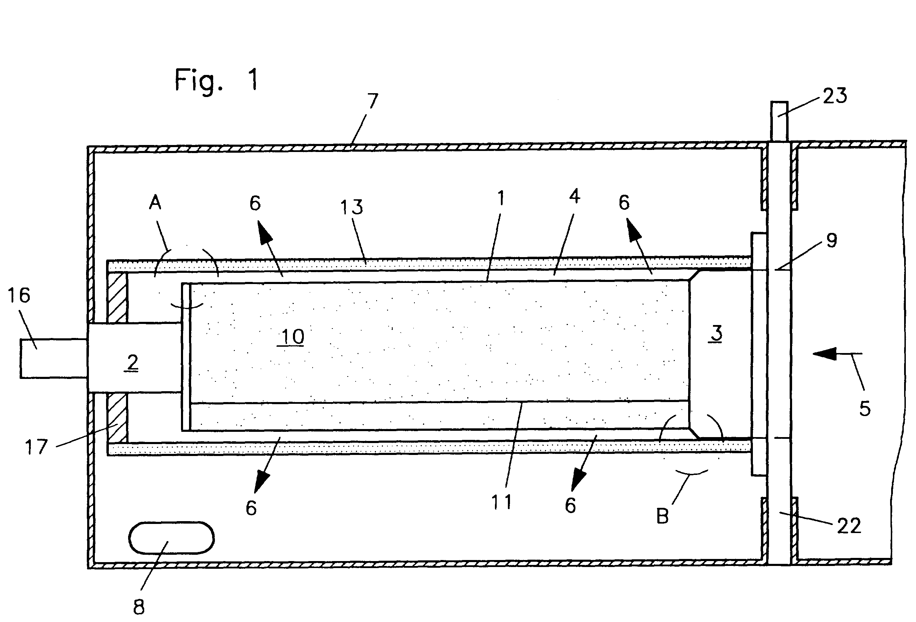

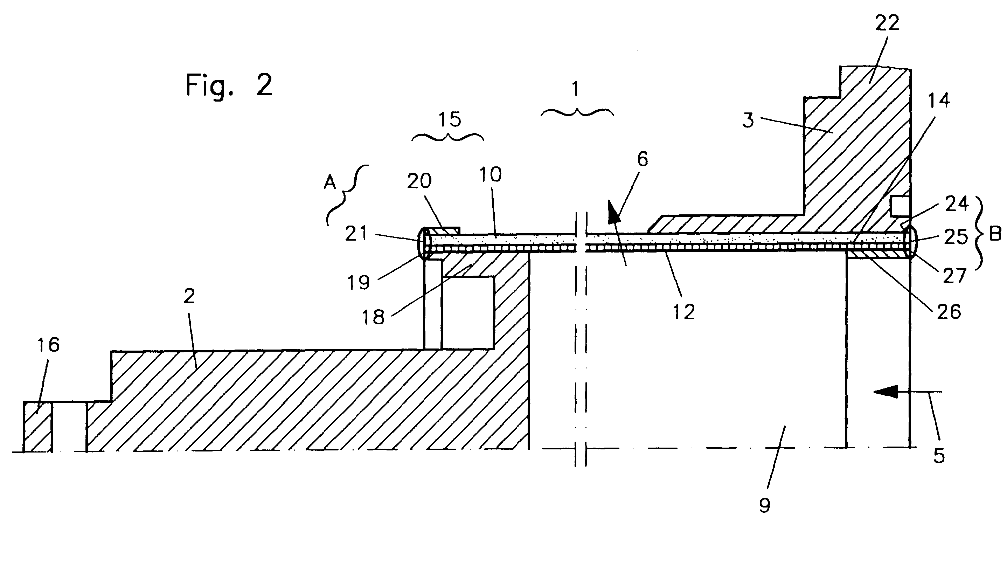

Von besonderer Bedeutung ist bei einem solchen Verfahren die Stromzuführung in das Filtermaterial, um eine gleichmäßige und vollständige Verbrennung zu erreichen. Dazu wird das hohlzylinderförmig angeordnete Filtermaterial nach dem neuen Verfahren von innen nach außen vom Abgas durchströmt, wobei das Filtermaterial eine Längsschweiß- oder Lötnaht sowie ein inneres, eng anliegendes, elektrisch leitendes Stützgitter aus Maschendraht aufweist. Der elektrische Strom zur Zündung der Verbrennung wird nun an der Innenseite des Hohlzylinders von einer Stirnseite, z.B dem Kerzenkopf 2 in den Figuren 1 und 2, her gleichzeitig in das Filtermaterial, die Längsnaht und das Stützgitter eingeleitet. Da die erste Wärmeentwicklung beim Abreinigen am inneren Stütz gitter entsteht und die Wärmeverluste durch Strahlung nach innen geringer sind als bei einer Strömungsrichtung von außen nach innen, ist hier die Anströmung von innen nach außen besonders wichtig. Dabei erfolgt die Stromzuführung mit der Kontaktierung von außen an den Kerzenkopf 2, d. h.von der Reingasseite her. Dies ist wichtig, um die Kontaktierung vor Korrosion zu schützen und nur möglich, wenn die Beaufschlagung der Filterkerze mit dem zu reinigenden Gas von innen, von der dem Kerzenkopf 2 entgegengesetzten Seite, dem Kerzenfuß 3 her erfolgt.

Als Filtermaterial finden vorzugsweise Metallfaservliese aus einer Eisenlegierung mit 0,03 % Kohlenstoff, 15,8 % Chrom, 4,8 % Aluminium, 0,3 % Silicium und 0,3 % Yttrium mit einem Faserdurchmesser von 4 bis 50 µm Verwendung, als Stützgitter Edelstahldrähte mit ca. 0,3 mm Durchmesser bei einer Maschenweite von ca. 0,7 mm. Solche Vliese sind bis zu Temperaturen von ca. 1200° C beständig.

In der Fig. 1 ist der Filterkörper 1 einer Filterkerze an einem Kerzenfuß 3 und einem Kerzenkopf 2 schematisch dargestellt, wobei mit Abstand um den Filterkörper 1 herum ein keramisches, gasdurchlässiges Hüllrohr 13 zur Wärmeisolierung und/oder als Katalysator angeordnet ist und ein Ringspalt 4 zwischen Filterkörper 1 und Rohr 13 gebildet wird. Das Vorsehen eines solchen Rohres 13 wird erst durch die Gaszuführung von innen ermöglicht. Der Kerzenkörper 1 wird vom Abgas von innen her durch den Kerzenfuß 3, der auf einem Anschlußflansch 22 sitzt, aus Richtung 5 angeströmt, das gereinigte Gas strömt über den Ringspalt 4 durch das keramische Rohr 13 hindurch in Richtung 6 ab. Um diese Strömungsrichtung zu erreichen, sitzt das Hüllrohr 13 mit der einen Seite dicht am Kerzenfuß 3 und mit der anderen am Kerzenkopf 2 bzw. an der Isolierung 17, so daß der Ringspalt 4 zu seinen Enden hin geschlossen ist.

Die Filterkerze zur Durchführung des beschriebenen Regenerierverfahrens ist zum Einsetzen in ein Gehäuse 7 mit einem Abgaskanal 8 bestimmt. Sie besteht im wesentlichen aus dem hohlzylindrisch ausgebildeten Filterkörper 1 aus dem leitenden Fasermaterial 10, der an seiner einen Seite mit dem Kerzenkopf 2 als Endplatte verschlossen ist und der an seiner anderen Seite auf einer ringförmigen Platte als Kerzenfuß 3 mit einer Öffnung 9 für den Gasdurchtritt sitzt. Die Stromzuführung bzw. - ableitung erfolgt über die beiden, elektrisch leitfähigen Teile 2 und 3. Der Filterkörper 1 aus den Metallfaservliesmatten 10 ist mittels einer Längsnaht 11 zu einem Hohlzylinder verschweißt oder verlötet, der eng anliegend auf ein elektrisch leitendes Stützgitter 12 aus Maschendraht aufgebracht ist (siehe die Fig. 2). Dabei ist das eine Ende 15 des Filterkörpers 1 an, auf oder in die den Kerzenkopf 2 bildende Endplatte geschweißt oder gelötet, das andere Ende 14 an, auf oder in die den Kerzenfuß 3 bildende ringförmige Platte um die Gaseinlaßöffnung 9. An der, dem Filterkörper 1 abgewendeten Seite des Kerzenkopfes 2 ist die Stromzuführung 16 zu diesem im Bereich des Reingases angebracht, wobei sie gegenüber dem Gehäuse 7 mittels der Isolation 17 elektrisch und thermisch isoliert ist. Der Anschluß zur Masse erfolgt über den am Anschlußflansch 22 des Kerzenfußes 3 gelegenen Stromanschluß 23.

Wichtig sind nun die Schweißverbindungen zwischen dem Filterkörper 1 und dem Kerzenfuß 3 sowie dem Kerzenkopf 2, die in der Fig.2 näher dargestellt sind. Im linken Teil die Verbindung mit dem Kerzenkopf (Detail A), im rechten Teil die Verbindung mit dem Kerzenfuß (Detail B).

Die Schweißstellen an den Verbindungen bilden die Stromein- bzw. -ableitungsstellen zum Fasermaterial 10. Dazu weist der Kerzenkopf 2 an seinem Außenrand einen Überstand 18 mit einer zum Kopfende gerichteten Stirnfläche 19 auf, über welchen der Hohlzylinder aus dem Metallfaservlies 10 mit dem Stützgitter 12 bis zur Stirnfläche 19 geschoben ist. Weiter ist um den Überstand 18, das Stützgitter 12 und den Hohlzylinder aus dem Faservlies 10 herum ist ein äußerer, eng anliegender Hüllblechring 20 aufgesetzt. Die Stirnflächen von Überstand 18,19, Hohlzylinder aus Faservlies 10, Stützgitter 12 und äußerem Hüllblechring 20 liegen bündig in einer Ebene und sind mittels einer Stirnnaht 21 zusammen verschweißt.

An der anderen Seite der Filterpatrone ist der Hohlzylinder aus Faservlies 10 mit dem Stützgitter 12 aus Maschendrahtin die Gaseinlassöffnung 9 des Kerzenfußes 3 eingeschoben, wobei an seiner Außenseite um die Öffnung 9 eine umlaufende Schweißlippe 24 mit einer Stirnfläche 25 in Richtung Einlaßseite vorhanden ist. Innerhalb des Stützgitters 12 ist an dieser Stelle ein innerer, eng anliegender weiterer Hüllblechring 26 eingeschoben, wobei die bündig liegenden Stirnflächen von Schweißlippe 24, Hohlzylinder aus Faservlies 10, Stützgitter 12 und innerem Hüllblechring 26 mittels einer weiteren Stirnnaht 27 gemeinsam verschweißt sind. Durch diese Ausbildung der Schweißnähte 21 und 27, die das sehr dünne Fasermaterial 10 mit den massiven Teilen 2 und 3 verbinden, wird verhindert, daß die Fasern durch den Wärmeeintrag aufschmelzen, bevor die massiven Kopf- und Fußteile 2 und 3 aufgeheizt sind. Die Schweißnähte 21 und 27 sind neben der Längsschweißnaht 11 und dem eng anliegenden Stützgitter 12 wichtig, um den Strom in das Fasermaterial 10 einzuleiten.

Für eine besonders schnelle Erwärmung ist es günstig,, daß der elektrische Widerstand der Längsschweiß- oder Lötnaht 11 in Längsrichtung des Filterkörpers 1 geringer ist, als der über den gesamten Querschnitt des Metallfaservlieses in Längsrichtung. Vorteilhafterweise soll dabei der elektrische Widerstand der Längsnaht 11 ca. 1/4 bis 1/3 des Widerstandes des Vlieses 10 betragen. Weiterhin sollte auch der elektrische Widerstand des Stützgitters 12 in Längsrichtung niedriger ist als der des gesamten Querschnittes des Metallfaservlieses in Längsrichtung. Auch hier kann der elektrische Widerstand des Stützgitters vorteilhafterweise ca. 1/4 bis 1/3 des Widerstandes des Vlieses betragen. Sind der elektrische Widerstand von Stützgitter 12 und Längsnaht 11 in Längsrichtung des Filterkörpers 1 etwa gleich, so erhitzen sich beide gleichmäßig bis zum Erreichen der Verbrennungstemperatur, wodurch das Filtermaterial 10 von innen her gleichmäßig schnell aufgeheizt wird.

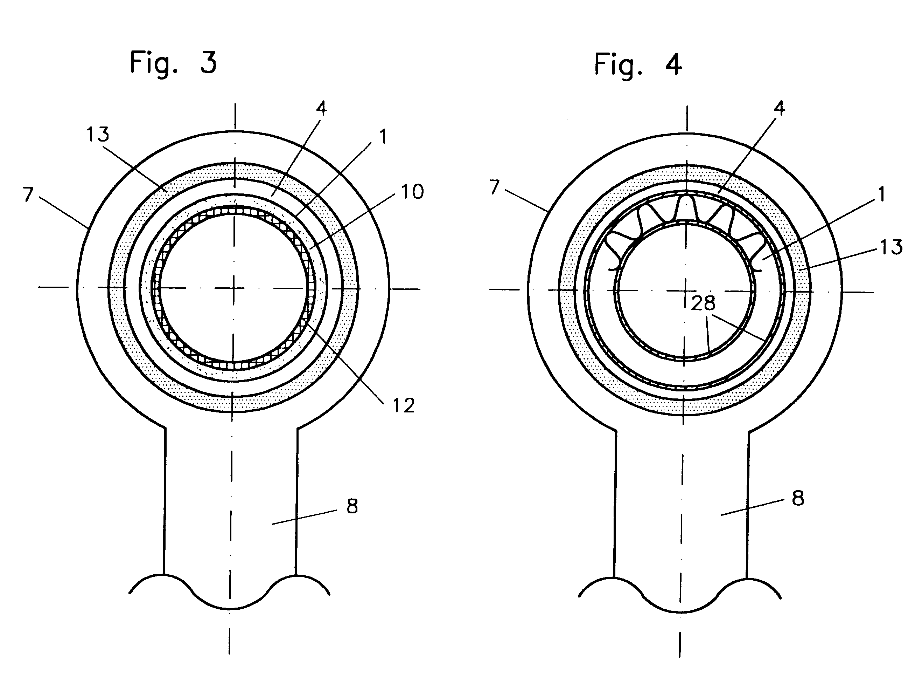

Das Filtermaterial 10 kann, wie in der Fig.3 dargestellt ein- oder mehrlagig flach auf das Stützgitter 12 aufgebracht sein, es ist jedoch auch möglich, wie in der Fig. 4 dargestellt, dasselbe plissiert zwischen zwei Stützgittern 28 einzuschließen. Die Verschweißung erfolgt dabei aber genauso, wie die bei der Ausführung gem. Fig. 3.

### Bezugszeichenliste:

- 1: Filterkörper
- 2: Kerzenkopf
- 3: Kerzenfuß
- 4: Ringspalt
- 5: Anströmrichtung
- 6: Abströmrichtung
- 7: Gehäuse
- 8: Abgaskanal
- 9: Öffnung
- 10: Fasermaterial
- 11: Längsschweißnaht
- 12: Stützgitter
- 13: Hüllrohr
- 14: Ende von 1
- 15: Ende von 1
- 16: Stromzuführung
- 17: Isolation
- 18: Überstand
- 19: Stirnfläche
- 20: äusserer Hüllblechring
- 21: Stirnnaht
- 22: Anschlußflansch
- 23: Stromanschluß
- 24: Schweißlippe
- 25: Stirnfläche
- 26: innerer Hüllblechring
- 27: Stirnnaht
- 28: Stützgitter

## Patentansprüche

1. Filterkerze zum Einsetzen in ein Gehäuse zur Abscheidung von brennbaren Substanzen aus Abgasen mit Regenerierung des beladenen Filtermateriales durch Verbrennung mit elektrischer Zündung, z. B. von mit Ruß beladenen Filtern im Abgasstrang von Dieselmotoren, wobei das Filtermaterial selbst elektrisch leitfähig ist und durch ohmsche Erwärmung über die Verbrennungstemperatur der abzuscheidenden Substanzen gebracht wird, mit einem hohlzylindrisch ausgebildeten Filterkörper aus dem Fasermaterial, der an seiner einen Seite mittels einer Endplatte als Kerzenkopf verschlossen ist und an seiner anderen Seite auf einer ringförmigen Platte mit einer Öffnung für den Gasdurchtritt sitzt, wobei die Stromzuführung bzw. -ableitung über die beiden, elektrisch leitfähigen Platten erfolgt und an der, dem Filterkörper abgewendeten Seite des Kerzenkopfes die Stromzuführung zu diesem im Bereich der Reingasseite angebracht ist, wobei sie gegenüber dem Gehäuse elektrisch und thermisch isoliert ist,
gekennzeichnet durch die folgenden Merkmale:
a) der Filterkörper (1) besteht aus Metallfaservliesmatten (10) und ist mittels einer Längsnaht (11) zu einem Hohlzylinder verschweißt oder verlötet, der eng anliegend auf ein elektrisch leitendes Stützgitter (12) aus Maschendraht aufgebracht ist,
b) das eine Ende (15) des Filterkörpers (1) ist an, auf oder in die den Kerzenkopf (2) bildende Endplatte geschweißt oder gelötet, das andere Ende (14) an, auf oder in die den Kerzenfuß (3) bildende ringförmige Platte um die Gaseinlaßöffnung (9),
c) der Kerzenkopf (2) weist an seinem Außenrand einen Überstand (18) mit einer zum Kopfende gerichteten Stirnfläche (19) auf, über welchen der Hohlzylinder aus dem Metallfaservlies (10) mit dem Stützgitter (12) bis zur Stirnfläche (19) geschoben ist,
d) um den Überstand (18), das Stützgitter (12) und den Hohlzylinder herum ist ein äußerer, eng anliegender Hüllblechring (20) angebracht,
e) die bündig liegenden Stirnflächen von Überstand (18), Hohlzylinder aus Faservlies (1), Stützgitter (12) und äußerem Hüllblechring (20) sind mittels einer Stirnnaht (21) gemeinsam verschweißt,
f) der Hohlzylinder aus Faservlies (10) ist mit dem Stützgitter (12) in die Gaseinlassöffnung (9) des Kerzenfußes (3) eingeschoben, wobei an dessen Außenseite um die Öffnung (9) eine umlaufende Schweißlippe (24) mit einer Stirnfläche (25) in Richtung Außenseite vorhanden ist,
g) innerhalb des Stützgitters (12) ist ein innerer, eng anliegender weiterer Hüllblechring (26) angeordnet,
h) die bündig liegenden Stirnflächen von Schweißlippe (24), Hohlzylinder aus Faservlies (1), Stützgitter (12) und innerem Hüllblechring (26) sind mittels einer Stirnnaht (27) gemeinsam verschweißt.

2. Filterkerze nach Anspruch 1, gekennzeichnet durch das weitere Merkmal:
i) mit Abstand um den Filterkörper (1) herum ist ein keramisches, gasdurchlässiges Hüllrohr (13) zur Wärmeisolierung und/oder als Katalysator angeordnet, wodurch der Spalt (4) zwischen Filterkörper (1) und Rohr (13) zu Gasabführung mit dem Gasauslaß (8) in Verbindung steht.

3. Filterkerze nach Anspruch 1 oder 2, dadurch gekennzeichnet, daß das Filtermaterial aus Metallfaservliesen aus einer Eisenlegierung mit 0,03 % Kohlenstoff, 15,8 % Chrom, 4,8 % Aluminium, 0,3 % Silicium und 0,3 % Yttrium mit einem Faserdurchmesser von 4 bis 50 µm besteht.

4. Filterkerze nach einem der Ansprüche 1 bis 3, dadurch gekennzeichnet, daß der elektrische Widerstand der Längsschweiß- oder Lötnaht (11) in Längsrichtung des Filterkörpers (1) geringer ist, als der über den gesamten Querschnitt des Metallfaservlieses (1) in Längsrichtung.

5. Filterkerze nach Anspruch 4, dadurch gekennzeichnet, daß der elektrische Widerstand der Längsnaht ca. 1/4 bis 1/3 des Widerstandes des Vlieses beträgt.

6. Filterkerze nach einem der Ansprüche 1 bis 5, dadurch gekennzeichnet, daß der elektrische Widerstand des Stützgitters (12) in Längsrichtung des Filterkörpers (1) niedriger ist als der des gesamten Querschnittes des Metallfaservlieses in Längsrichtung.

7. Filterkerze nach Anspruch 6, dadurch gekennzeichnet, daß der elektrische Widerstand des Stützgitters (12) ca. 1/4 bis 1/3 des Widerstandes des Vlieses (10) beträgt.

8. Filterkerze nach einem der Ansprüche 1 bis 7, dadurch gekennzeichnet, daß der elektrische Widerstand von Stützgitter (12) und Längsnaht in Längsrichtung etwa gleich ist.

## Claims

1. Filter cartridge, for use in a housing for removing combustible substances from waste gases, with regeneration of the charged filter material by combustion with electrical ignition, e.g. of filters charged with carbon black in the waste gas line of diesel engines, the filter material itself being electrically conductive and being brought above the combustion temperature of the substances to be removed by means of ohmic heating, said filter cartridge having a filter body configured as a hollow cylinder formed from the fibrous material, which cylinder is closed, at one end, by means of an end plate serving as the cartridge head and sits, at its other end, on an annular plate provided with an aperture for the gas to pass therethrough, the current supply and/or the current discharge being effected via the two electrically conductive plates, and the current supply to the cartridge head being mounted on the side of said cartridge head remote from the filter body in the region of the filtered gas side, said cartridge being electrically and thermally insulated relative to the housing,
characterised by the following features:
a) the filter body (1) comprises non-woven metal fibre matting (10) and is welded or soldered by means of a longitudinal seam (11) to form a hollow cylinder, which is fitted to abut closely against an electrically conductive support lattice (12) formed from wire mesh,
b) one end (15) of the filter body (1) is welded or soldered to, on or in the end plate forming the cartridge head (2), and the other end (14) is welded or soldered to, on or in the annular plate, forming the cartridge base (3), around the gas inlet aperture (9),
c) the cartridge head (2) includes, on its outer edge, an extension (18) with an end face (19) directed towards the head end, over which extension the hollow cylinder, formed from the non-woven metal fibre matting (10) with the support lattice (12), is slipped as far as the end face (19),
d) an outer, closely abutting sheet metal cover ring (20) is fitted around the extension (18), the support lattice (12) and the hollow cylinder,
e) the flush end faces of extension (18), hollow cylinder formed from non-woven fibre matting (1), support lattice (12) and outer sheet metal cover ring (20) are jointly welded by means of an end weld (21),
f) the hollow cylinder, formed from non-woven matting (10), is inserted with the support lattice (12) into the gas inlet aperture (9) of the cartridge base (3), there being a circumferential weld lip (24) on the outer surface of said base around the aperture (9), said lip being provided with an end face (25) in the direction of the outer surface,
g) an inner, closely abutting additional sheet metal cover ring (26) is disposed inside the support lattice (12),
h) the flush end faces of weld lip (24), hollow cylinder formed from non-woven matting (1), support lattice (12) and inner sheet metal cover ring (26) are jointly welded by means of an end weld (27).

2. Filter cartridge according to claim 1, characterised by the additional feature:
i) a ceramic, gas-permeable cover pipe (13) is disposed with a spacing around the filter body (1) for heat insulation and/or as a catalyst chamber, the gap (4) between filter body (1) and pipe (13) communicating with the gas outlet (8) for gas removal.

3. Filter cartridge according to claim 1 or 2, characterised in that the filter material comprises non-woven metal fibre matting formed from an iron alloy having 0.03 % carbon, 15.8 % chromium, 4.8 % aluminium, 0.3 % silicon and 0.3 % yttrium with a fibre diameter of between 4 and 50 µm.

4. Filter cartridge according to one of claims 1 to 3, characterised in that the electrical resistance of the longitudinal weld or soldered seam (11) is less in the longitudinal direction of the filter body (1) than that over the entire cross-section of the non-woven metal fibre matting (1) in the longitudinal direction.

5. Filter cartridge according to claim 4, characterised in that the electrical resistance of the longitudinal weld is approx. 1/4 to 1/3 of the resistance of the non-woven matting.

6. Filter cartridge according to one of claims 1 to 5, characterised in that the electrical resistance of the support lattice (12) in the longitudinal direction of the filter body (1) is lower than that of the entire cross-section of the non-woven metal fibre matting in the longitudinal direction.

7. Filter cartridge according to claim 6, characterised in that the electrical resistance of the support lattice (12) is approx. 1/4 to 1/3 of the resistance of the non-woven matting (10).

8. Filter cartridge according to one of claims 1 to 7, characterised in that the electrical resistance of support lattice (12) and longitudinal weld is substantially identical in the longitudinal direction.

## Revendications

1. Bougie filtrante pour insertion dans un réceptacle en vue de séparer des substances combustibles des gaz usés avec régénération du matériau de filtration chargé par combustion avec allumage électrique, par exemple de filtres chargés en noir de fumée dans la partie gaz d'échappement des moteurs diesel, le matériau de filtration étant lui-même électriquement conducteur et étant amené par échauffement ohmique au-dessus de la température de combustion des substances à séparer, avec un corps filtrant formé en cylindre creux dans la matière fibreuse qui sur un de ses côtés est fermé avec une plaque d'extrémité comme tête de bougie et à son autre côté repose sur une plaque annulaire avec ouverture pour le passage du gaz, l'entrée ou la sortie de courant au côté de la tête de bougie orientée vers le corps filtrant l'apport de courant se faisant du côté du gaz pur, avec isolation électrique et thermique par rapport au réceptacle,
caractérisée par les traits suivants :
• le corps filtrant (1) se compose d'un mat de voile de fibres métalliques (10) et est soudé au moyen d'une soudure longitudinale (11) à un cylindre creux qui est inséré au voisinage proche d'un grillage support (12) électroconducteur sur un fil de maille,
• l'une des extrémités (15) du corps filtrant (1) est soudée à, sur ou dans la plaque d'extrémité formant la tête de bougie (2), l'autre extrémité est soudée à, sur ou dans la plaque annulaire formant le pied de bougie (3) autour de l'ouverture d'entrée de gaz (9),
• la tête de bougie (2) présente à son bord externe une saillie (18) avec une surface latérale (19) dirigée vers l'extrémité de tête, sur laquelle le cylindre creux en voile de fibre métallique (10) avec la grille support (12) est insérée jusqu'à la surface frontale (19),
• autour de la saillie (18), de la grille support (12) et du cylindre creux est disposé un anneau de tôle de gainage (20) externe, situé à son voisinage proche,
• les surfaces frontales affleurant de la saillie (18), du cylindre creux en voile de fibre (11), de la grille support (12) et de l'anneau de tôle d'enrobage externe (20) sont soudées les unes aux autres au moyen d'une couture frontale (21),
• le cylindre creux en voile de fibre (10) est intégré avec la grille d'appui (12) dans l'ouverture d'entrée de gaz (9) du pied de la bougie (3), au côté extérieur de laquelle se trouve autour de l'ouverture (9) un rebord de soudure tournant (24) avec une surface latérale (25) en direction du côté extérieur,
• à l'intérieur de la grille support (12) se trouve disposé un autre anneau de tôle de gainage (26) interne, disposé très proche d'elle,
• les surfaces frontales affleurant du rebord de soudure (24), du cylindre creux en voile de fibre (1), de la grille support (12) et de l'anneau de tôle de gainage interne (26) sont soudées ensemble au moyen d'une couture frontale (27).

2. Bougie de filtration selon la revendication 1,
caractérisée par
le trait supplémentaire suivant :
• avec un intervalle autour du corps filtrant (1) se trouve un tube enveloppant (13) de céramique perméable au gaz pour l'isolation thermique et/ou en tant que catalyseur, la fente (4) entre le corps filtrant (1) et le tube (13) étant en liaison avec la sortie de gaz (8) pour évacuer le gaz.

3. Bougie de filtration selon la revendication 1 ou 2,
caractérisée en ce que
le matériau de filtration se compose de voiles de fibres métalliques faits d'un alliage d'acier avec 0,03 % de carbone, 15,8 % de chrome, 4,8 % d'aluminium, 0,3 % de silicium et 0,3 % d'yttrium avec un diamètre de fibres de 4 à 50 µm.

4. Bougie de filtration selon l'une des revendications 1 à 3,
caractérisée en ce que
la résistance électrique de la soudure longitudinale (11) en direction longitudinale du corps filtrant (1) est plus faible que celle qui s'observe sur l'ensemble de la section du voile de fibres métalliques (1) en direction longitudinale.

5. Bougie de filtration selon la revendication 4,
caractérisée en ce que
la résistance électrique de la couture longitudinale s'élève à environ 1/4 à 1/3 de la résistance du voile.

6. Bougie de filtration selon une des revendications 1 à 5,
caractérisée en ce que
la résistance électrique de la grille support (12) en direction longitudinale du corps filtrant (1) est plus faible que celle de l'ensemble de la section du voile de fibre métallique en direction longitudinale.

7. Bougie de filtration selon la revendication 6,
caractérisée en ce que
la résistance électrique de la grille support (12) s'élève à environ 1/4 à 1/3 de la résistance du voile (10).

8. Bougie de filtration selon l'une des revendications 1 à 7,
caractérisée en ce que
la résistance électrique de la grille support (12) et de la couture longitudinale dans la direction longitudinale sont approximativement identiques.
